# FASCICULE DE BREVET EUROPEEN

(11) **EP 0 560 678 B1**
(45) Date de publication et mention de la délivrance du brevet: **26.07.1995**
(21) Numéro de dépôt: 93400615.6
(22) Date de dépôt: 10.03.1993
(51) Int. Cl.: F23G 7/06, F23G 5/46, F26B 23/10, F28D 7/02, F28F 1/08, F28F 27/00

(54) **Dispositif d'épuration des effluents gazeux**
Vorrichtung zur Reinigung von Abgasen
Apparatus for purifying gaseous effluents

(30) Priorité: 10.03.1992 FR 9202856
(43) Date de publication de la demande: 15.09.1993
(73) Titulaire: DUMOUTIER ET MASSETAT, F-94430 Chennevières (FR)
(72) Inventeur: Teculescu, Nicolas, F-92190 Meudon (FR)
(74) Mandataire: Dawidowicz, Armand

(56) Documents cités:
- EP-A- 0 304 532
- EP-A- 0 350 512
- WO-A-82/00343
- FR-A- 1 564 760
- FR-A- 2 206 478
- GB-A- 667 281
- GB-A- 1 427 513
- GB-A- 2 000 263
- GB-A- 2 005 820
- US-A- 3 232 280
- US-A- 3 709 171
- US-A- 4 589 844
- CARACTERE vol. 40, no. 251, 17 Janvier 1989, pages 42 - 45 K. STOSCH 'Lépuration catalytique'

## Description

L'invention concerne l'épuration des effluents gazeux, en particulier de l'air extrait des fours et sécheurs et contenant des vapeurs de solvants et plus généralement des composés organiques volatils (COV). Elle concerne l'épuration par incinération dite purement thermique, cela pour la distinguer de l'incinération thermo-catalytique.

La forme de ces appareils est en général cylindrique, telle que décrite, entre autres par US-A-3.549.333, US-A-3.607.118, DE-A-3.014.269 ou EP-A-0.350.512.

Ces constructions ont toutes en commun le trajet en "zigzag" du gaz à l'extérieur des tubes de l'échangeur primaire, obtenu à l'aide de chicanes. Les principaux inconvénients du parcours en zigzag sont :
- l'existence des volumes parasites, nécessaires aux changements de direction, qui augmentent l'encombrement et le coût de l'appareil,
- les pertes de pression liées aux mêmes changements de direction,
- la distribution non uniforme des vitesses et surtout des températures. En effet, en particulier dans le cas d'appareils installés avec leur axe horizontal, de fortes différences de température s'établissent entre les parties supérieure et inférieure du corps cylindrique. Ces différences de température s'accompagnent de dilatations différentes qui créent des efforts importants dans la paroi des tubes en direction axiale, qui peuvent provoquer des dommages et notamment la rupture des soudures entre les tubes et les plaques d'extrémité qui les portent. Ces ruptures sont le principal problème des épurateurs du type concerné que tentent de résoudre les brevets DE-A-3.532.232 et EP-A-0.350.512.

Des déflecteurs en hélice ont été proposés pour des échangeurs à simples tubes (US-A-4.589.844) ou à faisceau tubulaire (GB-A-2.005.820) mais leur but est d'améliorer l'échange et/ou de rendre cet échange plus uniforme dans la direction radiale.

Pour obtenir les rendements nécessaires à l'application à un dispositif d'épuration, qui doivent être de l'ordre de 70%, 5 à 10 inversions ou passes sont nécessaires et autant de pas de l'hélice sont donc indispensables. Un tel nombre de passes, compte tenu de la longueur du faisceau tubulaire, entraîne l'utilisation d'une hélice de faible pas, induisant des pertes de charge élevées, ce qui explique l'absence de succès commercial de ces propositions.

Par ailleurs, la technologie actuelle utilise des échangeurs secondaires pour la récupération de la chaleur véhiculée par le gaz épuré sortant de l'échangeur primaire à une température de l'ordre de 300 à 400°C. En version air-air telle que décrite par DE-U-81.15801.7 l'investissement est élevé et s'est avéré peu rentable.

En version air-eau, comme présenté par WO-A-87.000.88, le niveau de température de l'eau est en général trop faible pour permettre l'utilisation de la chaleur récupérée par le four ou sécheur polluant; la chaleur est donc destinée au chauffage des locaux qui n'accepte qu'une faible fraction du potentiel annuel, d'où, là aussi, une rentabilité réduite.

En pratique, la durée de vie de ces échangeurs est généralement courte à cause des surchauffes accidentelles par défaillance du système de régulation ou lors d'une coupure générale de l'alimentation électrique.

La présente invention vise à éliminer les inconvénients décrits ci-dessus des dispositifs connus.

A cet effet, l'invention a pour objet un dispositif d'épuration par incinération purement thermique pour effluents gazeux, selon la revendication 1.

La présente invention élimine les inconvénients mentionnés en utilisant une trajectoire hélicoïdale pour le passage de l'air épuré dans la section libre restante entre les tubes; le principal but de cette trajectoire est d'uniformiser les températures des parois des tubes entre la partie supérieure et la partie inférieure du faisceau (stratification thermique due à la différence de densité de l'air dans le trajet en "zig-zag") et éviter la rupture des soudures. Ce but est totalement différent de celui poursuivi dans les brevets US-A-4.589.844 et GB-A-2.005.820. De plus, cette trajectoire est guidée par deux déflecteurs en forme d'hélice ayant chacun 2,5 à 4 pas. Cette solution assure un rendement élevé car elle crée, pour chaque tube, un nombre double soit 5 à 8 "passes" croisées et en même temps une perte de charge acceptable (pour une longueur de tube donnée) ainsi qu'une forme harmonieuse, d'où un coût moindre. Dans cette double hélice, le flux d'air est simplement divisé en deux parties qui suivent un mouvement parallèle, ce qui est l'inverse de ce que préconise WO-A-82.00.343, où la double hélice sert à guider des mouvements de sens contraire.

La rotation, composante du mouvement hélicoïdal de l'air épuré est, de plus, induite en amont, dans la chambre de combustion où elle améliore le rendement d'oxydation (destruction) des substances polluantes.

De préférence, les tubes de l'échangeur présentent une empreinte en relief, en particulier en forme d'hélice, de l'extérieur vers l'intérieur, d'une profondeur approximativement égale à l'épaisseur de la paroi et d'un pas égal à 15 à 30 fois la profondeur de ladite empreinte. L'application de cette technologie, en soi connue, aux épurateurs thermiques permet, un léger effet de soufflet de dilatation suffisant cependant pour diminuer les efforts dans les cordons de soudure des tubes, efforts dus aux petites différences de température qui peuvent apparaître, notamment en régime transitoire.

Accessoirement, l'échange de chaleur entre la paroi intérieure du tube et l'air pollué est intensifié, mais au prix d'une perte de charge augmentée.

Ainsi, le but principal de l'utilisation des tubes à empreinte en relief en forme d'hélice est de leur donner une élasticité en direction axiale ce que ne prévoient ni GB-A-1.427.513 ni US-A-3.232.280. En conséquence, les deux caractéristiques mentionnées de l'invention poursuivent le même but, à savoir éviter les efforts axiaux dans les tubes. Les déflecteurs agissent au niveau de la cause, l'empreinte dans le tube au niveau de la conséquence: pour un déplacement donné, le tube à empreinte ayant une élasticité supplémentaire par rapport au tube lisse, l'effort sera moindre.

En outre, l'invention propose un échangeur de récupération secondaire particulièrement compact et portant la température d'un fluide caloporteur, par exemple de type huile synthétique, à un niveau élevé, utilisable par le four ou sécheur auquel l'épurateur est raccordé. Le taux de récupération important et stable sur toute l'année permet d'obtenir une rentabilité intéressante.

Le problème de la surchauffe éventuelle du fluide caloporteur est résolu, dans le cadre de la présente invention, par l'alimentation à la partie supérieure de l'échangeur et un passage actif du haut vers le bas, l'évacuation de l'air épuré refroidi se faisant du bas vers le haut.

Ledit passage de l'air actif, à travers les tubes, du haut vers le bas présente également l'avantage qu'en cas de fort refroidissement de l'air épuré, une éventuelle condensation est évacuée naturellement; de plus, le fluide thermique circulant de bas en haut, les bulles d'air ou de gaz sont évacuées de manière fiable. Tous ces avantages sont absents dans FR-A-1.564.760 où le passage actif se fait du bas vers le haut.

Une réduction notable du coût de l'épurateur est obtenue, dans le cadre de l'invention, par la mise en place, à l'entrée des tubes, d'un échangeur additionnel du type tubulaire à ailettes avec circulation de fluide thermique.

L'invention propose enfin l'entraînement de la pompe de circulation du fluide caloporteur par le moteur entraînant le ventilateur de l'épurateur, ce qui représente une simplification et un gain de fiabilité par rapport à la solution habituelle comportant un moteur séparé.

L'invention sera bien comprise à la lecture de la description suivante faite en référence au dessin annexé qui représente un exemple de réalisation d'un dispositif selon la présente invention. Dans ce dessin :
la figure 1 est une coupe de l'ensemble de l'appareil d'incinération sans échangeur secondaire;
la figure 2 représente une portion d'un tube de l'échangeur primaire;
la figure 3 représente l'échangeur secondaire en fonctionnement normal;
la figure 4 représente la partie supérieure de l'échangeur secondaire en position de by-pass;
la figure 5 est une vue en perspective de l'échangeur préliminaire; et
la figure 6 représente le schéma de circulation du fluide caloporteur.

Le gaz pollué provenant du ventilateur (non représenté) entre dans l'épurateur par la bride 1 de la chambre de répartition 2. Le gaz s'engage à l'intérieur des tubes 3 de l'échangeur et sort préchauffé dans la chambre collectrice 4. En traversant le brûleur 5, le gaz parcourt dans un sens, puis dans le sens opposé, la chambre de combustion 6; celle-ci est maintenue, par le dosage du gaz combustible d'appoint alimentant le brûleur 5, à la température nécessaire au processus d'oxydation des substances polluantes. Le gaz désormais épuré est réparti à l'extérieur des tubes 3 et rencontre des déflecteurs 7, 7' formant une double hélice. Après, à titre d'exemple, quatre tours complets autour de la chambre de combustion 6, le gaz épuré revient à travers la chambre d'évacuation 8 vers l'axe de l'appareil pour sortir par le conduit 9.

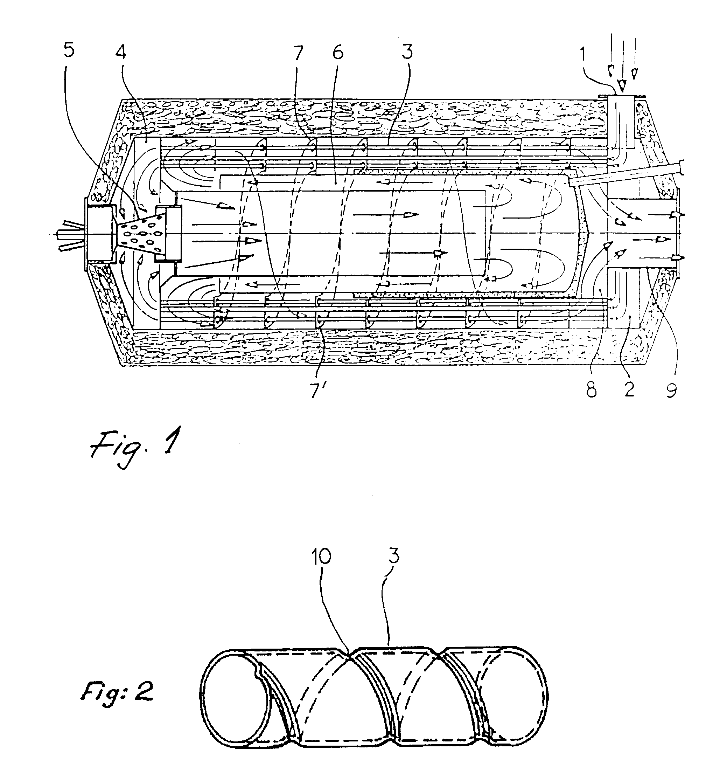

Dans la figure 2, on a représenté un détail d'un tube 3 muni d'une empreinte 10 en relief de forme hélicoïdale, de l'extérieur vers l'intérieur.

On remarque la profondeur de l'empreinte 10 à peu près égale à l'épaisseur de la paroi du tube et le pas représentant environ 15 fois ladite profondeur. Cette configuration donne au tube une structure analogue à celle d'un soufflet comme on l'a indiqué précédemment.

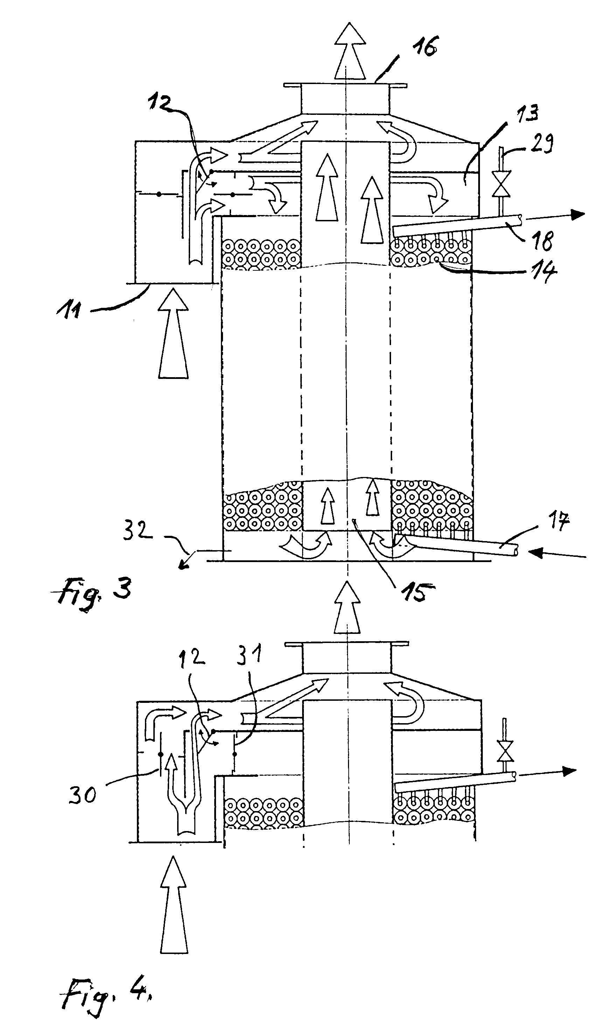

Le récupérateur secondaire représenté aux figures 3 et 4 est placé en aval de l'épurateur; l'air sortant du conduit 9 passe par une gaine de liaison (non représentée) pour entrer dans ledit récupérateur par la bride 11. Le volet de régulation 12 force une partie du débit à passer par la chambre de distribution 13 et à travers les tubes 14; arrivé à la partie inférieure des tubes, l'air refroidi remonte par la gaine centrale 15 pour sortir, avec l'air non refroidi, par la bride 16.

Le fluide thermique entre par le distributeur 17 dans lesdits tubes 14 qui forment plusieurs hélices à spires jointives, placées concentriquement et raccordées en parallèle. Ayant reçu la chaleur cédée par l'air épuré, le fluide sort par le collecteur 18; l'évacuation des gaz se fait ainsi aisément par la vanne 19.

En cas de défaillance de la régulation de température agissant sur le volet 12 de même qu'en cas de coupure de l'alimentation électrique, les volets 30 et 31, accouplés, sont actionnés par un ressort de manière à obliger l'air à être dérivé par l'échangeur, quelle que soit la position du volet 12. L'arrangement décrit ci-dessus, en soi connu, trouve une utilisation meilleure dans le cadre de la présente invention car l'échangeur étant alimenté à sa partie supérieure, en cas de défaillance, l'air chaud monte spontanément dans la cheminée ce qui évite la surchauffe de l'échangeur. La condensation qui se produit sur les échangeurs performants est évacuée par le drain 32.

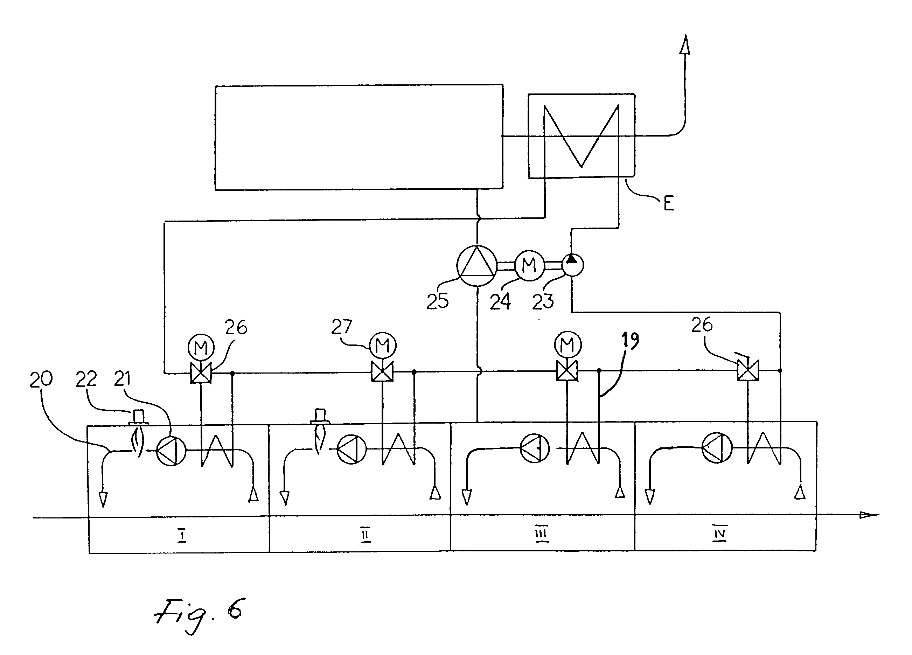

Etant donné la température élevée du fluide caloporteur, la chaleur récupérée peut être réutilisée par le processus polluant, suivant le schéma de principe représenté par la figure 6. Divers arrangements sont possibles, en conservant, dans le cadre de la présente invention, le principe de l'échange de chaleur direct, à l'aide d'échangeurs 19, entre ledit fluide et le flux d'air 20 brassé (recyclé) par les ventilateurs 21 à l'intérieur du four ou du sécheur. On obtient ainsi des températures d'air allant jusqu'à 250-280°C, ce qui couvre la majorité des cas rencontrés en pratique. Les sources de chaleur conventionnelles 22 du four ou sécheur restent généralement nécessaires dans les zones de chauffage à température élevée (I) et (II), les zones à température et consommation moindres (III), (IV) pouvant souvent être chauffées exclusivement par récupération.

De même, certaines des vannes à trois voies 26 réglant l'apport de chaleur récupérée dans chaque zone devront être équipées de servomoteurs 27 alors que d'autres peuvent être de type manuel et rester bloquées dans une position fixe.

La récupération est optimisée par la "mise en série", dans le sens des températures d'air décroissantes, des échangeurs à fluide caloporteur 19. Dans l'exemple représenté,
TI > TII > TIII > TIV.

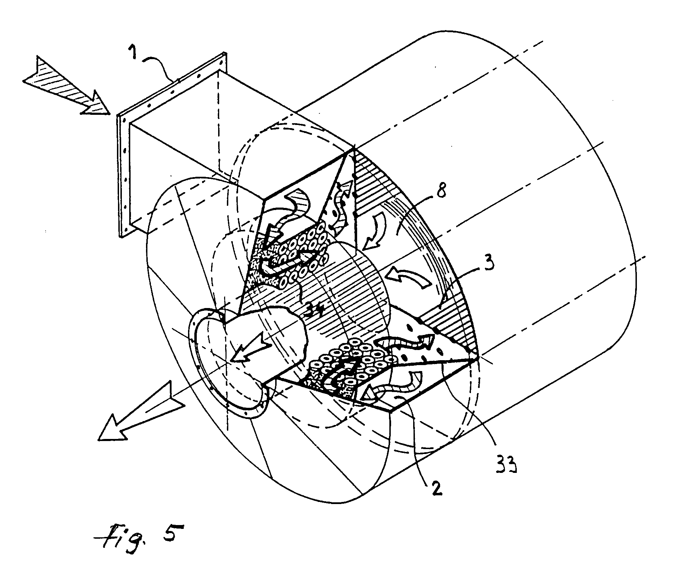

Pour certaines applications de la présente invention, notamment faible teneur en solvants à faible température des effluents, il est avantageux d'ajouter un échangeur que nous appelerons préliminaire. Le fluide thermique échauffe dans ce cas en même temps que le four ou sécheur polluant, les effluents qui existent dans l'épurateur. L'invention porte sur l'emplacement dudit échangeur préliminaire à l'intérieur de la chambre de répartition 2; en effet, comme le montre la figure 5, ladite chambre 2 comporte un volume suffisant pour assurer en même temps que la répartition des effluents arrivant par la bride 1, la place nécessaire pour ledit échangeur préliminaire 34 ainsi que pour le déflecteur 33 qui guide l'air à travers ledit échangeur préliminaire 34.

Un tel échangeur préliminaire permet d'augmenter le rendement d'échange global par exemple de 70% avec le seul échangeur à faisceau tubulaire à 74%. Il s'agit de chaleur gratuite, provenant d'un échangeur de récupération secondaire tel que décrit par la figure 3.

Une autre simplification est apportée par l'entraînement de la pompe de circulation 23 du fluide caloporteur par le moteur 24 ventilateur 25.

Cette description permet de souligner à l'aide de l'exemple représenté, certains avantages apportés par la présente invention à savoir l'économie d'énergie obtenue avec un investissement raisonnable.

## Revendications

1. Dispositif d'épuration par incinération purement thermique pour effluents gazeux, du type à apport de chaleur supplémentaire à combustible gazeux et à préchauffage par récupération à l'aide d'un échangeur primaire à faisceau tubulaire (3) et concentrique à la chambre de combustion cylindrique (6),
caractérisé en ce que ledit échangeur primaire comporte des déflecteurs (7, 7') pour donner à l'air épuré sortant de la chambre de combustion (6) un mouvement hélicoïdal autour de ladite chambre de combustion (6), traversant la section libre restante entre lesdits tubes (3), les déflecteurs (7, 7') guidant le mouvement de l'air épuré forment deux hélices disposées symétriquement par rapport à l'axe de la chambre de combustion (6), le mouvement dudit air épuré le long des deux hélices se faisant dans le même sens.

2. Dispositif selon la revendication 1,
caractérisé en ce que les tubes (3) de l'échangeur primaire présentent une empreinte (10) en relief, en particulier en forme d'hélice, de l'extérieur vers l'intérieur, d'une profondeur approximativement égale à l'épaisseur de la paroi et d'un pas égal à 15 à 30 fois la profondeur de ladite empreinte (10), les tubes présentant ainsi un effet de soufflet de dilatation.

3. Dispositif selon l'une des revendications 1 et 2,
caractérise en ce que les hélices (7, 7') comportent 2 à 5 pas, de préférence environ 2,5 pas.

4. Dispositif selon l'une des revendications 1 à 3,
caractérisé en ce qu'il comporte un échangeur de récupération secondaire, par fluide caloporteur, de forme cylindrique, à axe vertical, l'entrée et la sortie de l'air épuré se faisant à la partie supérieure de l'échangeur, le trajet de l'air à travers les tubes étant fait du haut vers le bas, le fluide caloporteur passant du bas vers le haut, l'évacuation de l'air refroidi étant faite par une gaine centrale (15).

5. Dispositif selon l'une des revendications 1 à 4,
caractérisé en ce qu'un échangeur préliminaire (34) pour élever la température des effluents pollués est installé à l'intérieur de la chambre de répartition (2) avant l'entrée desdits effluents dans les tubes (3).

6. Dispositif selon l'une des revendications 1 à 5,
caractérisé en ce que le fluide caloporteur cède la chaleur récupérée directement à l'air brassé dans un four de traitement dont provient le gaz pollué, à l'aide d'échangeurs (19) raccordés en série dans le sens des températures de l'air brassé décroissantes.

7. Dispositif selon l'une des revendications 1 à 6,
caractérisé en ce que la pompe de circulation (23) du fluide caloporteur est accouplée à l'extrémité libre de l'arbre du moteur (24) entraînant le ventilateur (25).

## Claims

1. Apparatus for purifying gaseous effluents by purely thermal incineration, of the type with a supply of additional heat to gaseous fuel and with preheating by recovery with the aid of a primary exchanger with a tube bundle (3) and concentric to the cylindrical combustion chamber (6),
characterised in that the said primary exchanger comprises deflectors (7, 7') to impart to the purified air leaving the combustion chamber (6) a spiral movement around the said combustion chamber (6), passing through the remaining free area between the said tubes (3), the deflectors (7, 7') guiding the movement of the purified air form two spirals disposed symmetrically with respect to the axis of the combustion chamber (6), the movement of the said purified air along the two spirals taking place in the same direction.

2. Apparatus according to claim 1,
characterized in that the tubes (3) of the primary exchanger have an indentation (10) in relief, in particular in the form of a spiral, from the outside towards the inside, of a depth approximately equal to the thickness of the wall and of a pitch equal to 15 to 30 times the depth of the said indentation (10), the tubes thus having an expansion bellows effect.

3. Apparatus according to either of claims 1 or 2,
characterized in that the spirals (7, 7') are of 2 to 5 pitch, preferably about 2.5 pitch.

4. Apparatus according to any of claims 1 to 3,
characterized in that it comprises an exchanger for secondary recovery by heat-exchanging fluid, cylindrical in shape with a vertical axis, the purified air entering and leaving at the upper part of the exchanger, the passage of the air through the tubes being from top to bottom, the heat-exchanging fluid passing from the bottom to the top, the evacuation of the cooled air taking place by way of a central flue (15).

5. Apparatus according to any of claims 1 to 4,
characterized in that a preliminary exchanger (34) to raise the temperature of the polluted effluents is installed inside the distribution chamber (2) before the entry of the said effluents into the tubes (3).

6. Apparatus according to any of claims 1 to 5,
characterized in that the heat-exchanging fluid gives up the recovered heat directly to the agitated air in a treatment furnace from which the polluted gas comes, with the aid of exchangers (19) connected in series in the direction in which the agitated air falls in temperature.

7. Apparatus according to any of claims 1 to 6,
characterized in that the circulation pump (23) for the heat-exchanging fluid is coupled to the free end of the shaft of the motor (24) driving the ventilator (25).

## Patentansprüche

1. Vorrichtung zur Reinigung von Abgasen mittels rein thermischer Verbrennung der Bauart, bei der zusätzliche Wärme von gasförmigem Brennstoff zugeführt wird und mit einer Vorheizung durch Rückgewinnung mittels eines ersten Austauschers mit einer rohrförmigen und konzentrisch zur zylindrischen Brennkammer (6) angeordneten Heizkammer (3), **dadurch gekennzeichnet**, daß der erste Austauscher Ablenkplatten (7, 7') umfaßt, die sich über den verbleibenden freien Querschnitt zwischen den Rohren (3) erstrecken, um der aus der Brennkammer (6) herausströmenden gereinigten Luft eine schraubenförmige Bewegung um die oben genannte Brennkammer (6) herum zu geben, wobei die Ablenkplatten (7, 7'), die die Bewegung der gereinigten Luft führen, zwei Schraubengänge bilden, die symmetrisch zur Achse der Brennkammer (6) angebracht sind und wobei die Bewegung der oben genannten gereinigten Luft entlang der beiden Schrauben gleichsinnig erfolgt.

2. Vorrichtung nach Anspruch 1, **dadurch gekennzeichnet**, daß die Rohre (3) des ersten Austauschers eine von außen nach innen eingeprägte, insbesondere schraubenförmige, Vertiefung (10) aufweisen, mit einer Tiefe, die annähernd der Dicke der Wandung entspricht, und mit einem Gang, der 15 bis 30 mal der Tiefe der Vertiefung (10) entspricht, wobei die Rohre die Wirkung eines Dehnungsausgleichers haben.

3. Vorrichtung nach einem der Ansprüche 1 und 2, **dadurch gekennzeichnet**, daß die Schrauben (7, 7') 2 bis 5 Gänge, vorzugsweise etwa 2,5 Gänge aufweisen.

4. Vorrichtung nach einem der Ansprüche 1 bis 3, **dadurch gekennzeichnet**, daß sie einen zweiten Austauscher zur Rückgewinnung mit einem Wärmetransportmittel mit zylindrischer Form und vertikaler Achse umfaßt, wobei der Eintritt und Austritt der gereinigten Luft am Oberteil des Austauschers erfolgt, der Weg der Luft durch die Rohre von oben nach unten verläuft, das Wärmetransportmittel von unten nach oben strömt und der Austritt der abgekühlten Luft über eine zentrale Leitung (15) erfolgt.

5. Vorrichtung nach einem der Ansprüche 1 bis 4, **dadurch gekennzeichnet**, daß ein Vor-Wärmetauscher (34) zur Erhöhung der Temperatur der verunreinigten Abgase in der Verteilungskammer (2) vor dem Einlaß der Abgase in die Rohre (3) angebracht ist.

6. Vorrichtung nach einem der Ansprüche 1 bis 5, **dadurch gekennzeichnet**, daß das Wärmetransportmittel die zurückgewonnene Wärme mit Hilfe von Austauschern (19), die hintereinander in Richtung der abfallenden Lufttemperaturen angebracht sind, direkt an die in einem Prozeßofen verwirbelte Luft abgibt, aus dem das verunreinigte Gas stammt,.

7. Vorrichtung nach einem der Ansprüche 1 bis 6, **dadurch gekennzeichnet**, daß die Förderpumpe (23) für das Wärmetransportmittel am freien Ende der Welle des Motors (24) angebracht ist, der den Ventilator (25) antreibt.
